# FASCICULE DE BREVET EUROPEEN

(11) **EP 3 052 291 B1**
(45) Date de publication et mention de la délivrance du brevet: **01.01.2020**
(21) Numéro de dépôt: 14796203.9
(22) Date de dépôt: 26.09.2014
(51) Int. Cl.: B29C 45/14, B29C 70/76, B62D 25/06, B60J 1/02

(54) **VITRAGE COMPORTANT UNE PORTION DE JOINT A INSERT FERME ET PROCÉDÉ DE FABRICATION DUDIT VITRAGE**
VERGLASUNG MIT EINEM GESCHLOSSENEN EINSATZVERSIEGELUNGSELEMENT UND VERFAHREN ZUR HERSTELLUNG DIESER VERGLASUNG
GLAZING COMPRISING A CLOSED INSERT SEAL PORTION AND METHOD OF MANUFACTURING SAID GLAZING

(30) Priorité: 01.10.2013 FR 1359481
(43) Date de publication de la demande: 10.08.2016
(73) Titulaire: Saint-Gobain Glass France, 92400 Courbevoie (FR)
(72) Inventeur: BLANC, Olivier, F-60170 Tracy Le Mont (FR); LAMOUREUX, Laurent, F-60180 Ribecourt-Dreslincourt (FR); ATTARD, Marie-Camille, F-60180 Margny-les-Compiegne (FR); GRANDGIRARD, Bastien, F-60490 Marqueglise (FR)
(74) Mandataire: Saint-Gobain Recherche
(86) Numéro de dépôt international: PCT/FR2014/052422
(87) Numéro de publication internationale: WO 2015/049440

(56) Documents cités:
- EP-A1- 2 353 907
- WO-A1-2005/014320
- FR-A1- 2 814 705
- FR-A1- 2 948 609

## Description

La présente invention concerne un vitrage muni d'une portion de joint qui est renforcée par un insert et plus particulièrement par un insert qui présente, à l'intérieur de la portion de joint, un creux.

La présente invention concerne également le procédé de fabrication d'un tel vitrage.

La présente invention concerne ainsi un vitrage comportant un élément vitré, au moins une portion de joint profilé et au moins un insert situé au moins partiellement à l'intérieur de ladite portion de joint profilé, ledit insert présentant le long d'une partie principale qui est dans ladite portion de joint profilé, en coupe transversale, une section refermée sur elle-même en forme de boucle et formant un creux. La boucle en question n'est pas forcément complètement refermée sur elle-même, mais le creux ainsi formée est suffisamment prononcé pour que se pose alors le problème de son remplissage par la matière de joint lors de l'injection de cette matière.

En effet, l'art antérieur connaît de la demande internationale de brevet N° WO 2005/014320, et en particulier des figures 4a, 4b, 6, 7, 9b, des configurations d'insert pour portions de joint présentant le long d'une partie principale, en coupe transversale, une section refermée sur elle-même en forme de boucle et formant un creux et le remplissage de ce creux par de la matière de joint peut poser un double problème :
- un problème d'instabilité dans le procédé de fabrication du fait que le creux (ou les creux s'il y en a plusieurs) est (ou sont) difficile(s) à remplir de la matière injectée ; la progression de la matière fluide, son adhérence aux parois du creux, et la quantité finale sont des paramètres difficiles à maîtriser et cela engendre une absence de répétabilité d'un vitrage à l'autre ; cette instabilité conduit à ce que, parfois, la peau de la portion de joint profilé ne soit pas lisse mais plissée ou parfois rugueuse ou avec des bulles, en particulier à proximité de l'insert ;
- un problème de fiabilité de positionnement de l'insert vis-à-vis de l'élément vitré lorsqu'un (ou plusieurs) trou(s) dans l'insert est (ou sont) utilisé(s) pour son positionnement dans le moule car l'arrivée de matière de joint au niveau de ce (ou ces) trou(s) par l'intérieur du creux peut modifier le positionnement de l'insert.

Il est important de remarquer que l'origine de ces deux problèmes était difficile à déceler ; comme il s'agit d'un procédé de fabrication complexe, avec de très nombreux paramètres, il a fallu réaliser de très nombreux essais avant de se rendre compte que cela venait du remplissage du (ou des) creux de l'insert.

En outre, la matière de joint présente dans le creux était présumée avoir un effet bénéfique sur la tenue mécanique de l'ensemble élément vitré / portion de joint / insert.

La présente invention repose ainsi sur une solution où un bouchon est disposé à une ou à chaque extrémité de l'insert qui présente un creux, afin d'empêcher que la matière de la portion de joint profilé pénètre dans le(s) creux. Ainsi, il n'y a plus d'incertitude sur le volume effectivement rempli par la matière du cordon profilé qui est injecté dans le moule et la surface de ce cordon est toujours homogène.

En effet, après de nombreux essais, les inventeurs ont compris qu'il pouvait être plus avantageux de fermer l'extrémité (ou les extrémités) en creux d'un insert afin que la matière du joint ne pénètre pas du tout dans le (ou les) creux de l'insert.

Ils ont en outre compris que les bénéfices supposés de la présence de matière de joint dans le (ou les) creux n'étaient en fait pas fondés et que les avantages procurés par la fermeture du (ou des) creux étaient finalement beaucoup plus importants que les avantages du remplissage de ce(s) creux.

La présente invention se rapporte ainsi à un vitrage selon la revendication 1. Ce vitrage comporte entre autres un élément vitré, au moins une portion de joint profilé et au moins un insert situé au moins partiellement à l'intérieur de ladite portion de joint profilé, ledit insert présentant le long d'une partie principale qui est dans ladite portion de joint profilé, en coupe transversale, une section refermée sur elle-même en forme de boucle et formant un creux ; suivant l'invention, ladite partie principale comporte à au moins une extrémité, et de préférence à deux extrémités opposées, un bouchon qui ferme ladite extrémité et de préférence lesdites extrémités. Le bouchon ferme ainsi complètement ladite extrémité. Ainsi, la matière de ladite portion de joint profilé ne pénètre pas dans ledit creux.

La présente invention propose une solution lorsque ladite portion de joint profilé n'est pas présente tout autour du contour extérieur du profilé, le long d'une partie principale mais est présente autour de trois côtés du contour extérieur du profilé. La présente invention propose une solution lorsque l'insert est disposé, par l'intermédiaire d'un revêtement adhésif, sur une face de l'élément vitré avec ainsi un côté de l'insert qui est indirectement en contact avec l'élément vitré et ladite portion de joint profilé qui est présente autour du reste du contour extérieur de l'insert.

La présente invention propose ainsi une solution générale lorsque qu'un insert présente un creux, c'est-à-dire lorsque le long d'une partie principale, lorsque la section transversale de l'insert est observée, la matière de ladite portion de joint profilé est présente autour d'au moins deux côtés du contour extérieur de l'insert, voire autour de trois côtés, et est susceptible aussi d'être présente à l'intérieur de ce contour extérieur.

La présente invention vise alors à empêcher que la matière de ladite portion de joint profilé soit présente à l'intérieur de ce contour extérieur de l'insert.

Le bouchon selon l'invention est de préférence positionné à une extrémité longitudinale d'un insert de sorte que la matière du cordon profilé ne puisse pas du tout pénétrer ; toutefois, il est possible aussi de positionner un bouchon sans tête de telle sorte qu'il existe encore un petit creux à une extrémité mais de volume limité (au plus quelques cm³).

Afin de boucher le plus efficacement possible ladite extrémité, ledit bouchon est, de préférence, une pièce rapportée qui présente un corps présentant une section extérieure égale voire supérieure, en particulier si une rainure périphérique est ménagée à l'intérieur de la face interne du creux, à la section intérieure de ladite extrémité.

Dans une variante, ledit bouchon est une pièce rapportée qui présente en coupe longitudinale une forme de U, afin de diminuer le poids du bouchon.

Dans une variante spécifique, ledit bouchon est une pièce rapportée qui comporte au moins une face en contact avec une face intérieure de ladite extrémité et qui est en forme de dents de scie, afin que le bouchon soit maintenu comprimé à l'intérieur du creux.

Il est possible que le bouchon soit une pièce rapportée qui présente une tête présentant une section extérieure égale voire supérieure à la section extérieure de ladite extrémité, afin de procurer une face étanche à la matière de ladite portion de joint qui est située au-delà de l'extrémité.

Dans une variante particulière, ledit bouchon est une pièce rapportée au moins en partie en mousse, avec la mousse du bouchon qui remplit la section de ladite extrémité, de préférence sans dépasser au-delà de ladite extrémité.

Dans une variante toute particulière, ladite extrémité comporte au moins un trou pour le positionnement de l'insert dans le moule d'injection de la matière de la portion de joint profilé, ledit trou étant bouché en face intérieure dudit insert par ledit bouchon.

De préférence, le bouchon laisse découvert la totalité du pourtour extérieur de ladite extrémité.

Il est possible par ailleurs que le bouchon ne soit pas une pièce rapportée mais soit venu de matière avec l'extrémité de l'insert. Ainsi, le bouchon peut être formé à l'extrémité de la partie principale par pliage d'une aile de l'insert et soudure de cette aile, en particulier lorsque l'insert est en matière plastique ou en métal ou alliage métallique puisque ces matières peuvent être pliées sans se rompre et peuvent être soudées.

La présente invention est particulièrement adaptée lorsque l'extrémité, et de préférence les extrémités, de la partie principale sont intégrée(s) complètement dans ladite portion de joint profilé, mais elle convient aussi lorsque la portion de joint profilé est située autour d'une partie seulement de l'extrémité ou des extrémités.

Selon l'invention, ladite partie principale est formée par pliage d'une plaque longitudinale sur elle-même qui est refermée le long d'une jonction longitudinale par une soudure, en particulier lorsque l'insert est en matière plastique ou en métal ou alliage métallique, ou par un moyen de jonction supplémentaire, ledit moyen de jonction étant de préférence une couche de colle ou un ruban adhésif disposé entre ledit insert et une face, et notamment la face intérieure, dudit élément vitré.

La présente invention concerne également un procédé de fabrication d'un vitrage comportant un élément vitré et notamment d'un vitrage selon ce qui a été présenté précédemment, ledit vitrage comportant un élément vitré, au moins une portion de joint profilé et au moins un insert situé au moins partiellement à l'intérieur de ladite portion de joint profilé, ledit insert présentant le long d'une partie principale qui est dans ladite portion de joint profilé, en coupe transversale, une section refermée sur elle-même en forme de boucle et formant un creux, ledit procédé comportant une étape de positionnement dudit élément vitré et dudit insert dans une partie de moule afin de former ladite portion de joint profilé dans une cavité dudit moule., Selon ce procédé, avant que ledit insert soit positionné dans ladite partie de moule, ladite partie principale est fermée à au moins une extrémité, et de préférence à deux extrémités opposées, par un bouchon, afin que lors de l'injection de la matière de ladite portion de joint profilé dans ladite cavité du moule, cette matière ne pénètre pas dans ledit creux.

L'utilisation d'un bouchon selon l'invention pour fermer hermétiquement au moins une extrémité en creux d'un insert, et de préférence toutes les extrémités en creux d'un insert est particulièrement avantageuse.

La présente invention permet de réaliser une liaison très fiable entre l'élément vitré, la portion de joint et l'insert à partie(s) en creux malgré l'absence ou la présence en volume très petit de la matière de joint dans cette (ces) partie(s) en creux, tout en permettant une très bonne répétabilité de la fabrication et donc une apparence et des propriétés (notamment tenue mécanique) très similaires d'un vitrage à l'autre dans une même série.

En outre, la présente invention permet de fiabiliser le positionnement d'un insert dans une portion de joint lorsque ce positionnement est réalisé par au moins un trou dans l'insert.

Par ailleurs, l'absence de matière de joint dans la (ou les) partie(s) en creux permet d'économiser de la matière de joint et permet d'alléger le vitrage, même en prenant en considération le prix et le poids du (ou des) bouchon(s). L'allégement est encore plus important si un (ou des) bouchon(s) creux est (ou sont) utilisé(s), avec le creux du (ou des) bouchon(s) en vis-à-vis du creux de l'insert. La face du bouchon en contact avec la portion de joint est de préférence plate (non creuse).

Comme la fermeture du (ou des) creux de l'insert est réalisée avant l'introduction de l'insert dans le moule de fabrication du joint, cette étape n'a pas d'effet négatif sur la cadence de la fabrication du joint sur le vitrage pour une série de vitrage.

On décrit ci-après, à titre d'exemples non limitatifs, plusieurs formes d'exécution de la présente invention, en référence aux dessins annexés sur lequel :
- la figure 1 illustre un vitrage selon l'invention vu de l'intérieur, ce vitrage comportant deux inserts complètement intégrés dans la portion de joint qui, bien que normalement invisibles, sont matérialisés en pointillés ;
- la figure 2 est une vue en perspective de l'insert du haut de la figure 1 fabriqué ici par pliage d'une bande métallique sur elle-même ;
- la figure 3 est une vue schématique de face d'une extrémité de l'insert de la figure 2 avec en outre un moyen pour refermer une fente longitudinale de cet insert ;
- la figure 4 illustre une vue schématique en coupe partielle selon AA' de la figure 1 de la fermeture d'un insert à l'aide d'un bouchon plein à tête plate selon l'invention ;
- la figure 5 est une vue en coupe, similaire à celle de la figure 4, d'une variante de réalisation de la fermeture d'un insert à l'aide d'un bouchon creux à tête plate ;
- la figure 6 est une vue schématique en perspective du bouchon de la figure 5 ;
- la figure 7 est une vue schématique en coupe, similaire à celle de la figure 4, d'une autre variante de réalisation de la fermeture d'un insert à l'aide d'un bouchon plein à tête volumineuse ; et
- la figure 8 est une vue schématique en coupe, similaire à celle de la figure 4, d'une autre variante de réalisation de la fermeture d'un insert à l'aide d'une soudure.

Dans les figures schématiques, les proportions entre les différents éléments ne sont pas exactement respectées sur chaque figure mais sont respectés d'une figure similaire à l'autre et les éléments en arrière plan ne sont en général pas représentés, afin de faciliter leur lecture.

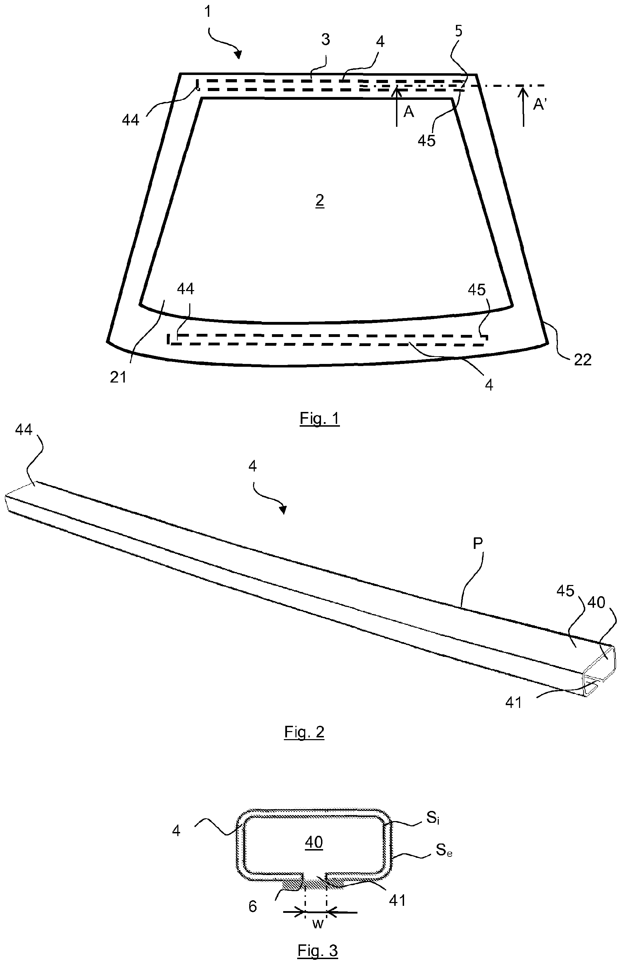

La figure 1 illustre la réalisation d'un vitrage 1 de véhicule selon l'invention, comprenant un élément vitré 2 ainsi qu'une portion de joint profilé 3.

Le vitrage 1, est destiné à fermer une baie réalisant une séparation entre un espace intérieur du véhicule et un espace extérieur au véhicule. L'élément vitré 2 présente ainsi une face intérieure 21, destinée à être tournée vers l'espace intérieur, une face extérieure 23 destinée à être tournée vers l'espace extérieur, ainsi qu'un chant 22 périphérique.

Ainsi, lorsqu'il est fait référence aux notions de « intérieur » et « extérieur » dans le présent document, c'est toujours en référence à cette considération.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie, tout autour du bord de la face intérieure 21, une bande d'ornementation (non illustrée). Cette bande d'ornementation résulte en général d'un dépôt d'émail, réalisé sur la face intérieure de l'élément vitré lorsqu'il est monolithique ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Pour information, la fabrication d'un élément vitré en matière organique en grande série est plus onéreuse que la fabrication d'un élément vitré en matière minérale et le premier mode de fabrication est en général choisi lorsque la forme de l'élément vitré est tellement complexe qu'elle ne peut pas être réalisée par bombage d'un élément vitré en matière minérale.

Lorsque l'élément vitré est un élément vitré composite, il a été fabriqué selon la technique bien connue de fabrication des vitrages multiples ou des vitrages feuilletés, éventuellement bombés.

Sur la figure 1, l'élément vitré 2 est un vitrage monolithique. C'est ici un vitrage fixe de toit de véhicule automobile. Ce vitrage est de grande envergure et c'est la raison essentielle pour laquelle il comporte au moins un insert 4.

La portion de joint profilé 3 adhère à la face intérieure 21 de l'élément vitré et est situé sur tout le pourtour périphérique de cette face intérieure.

Cette portion de joint profilé 3 incorpore deux inserts 4 : l'un situé en partie avant du vitrage, l'autre en partie arrière du vitrage, par rapport au sens d'avancé du véhicule ; ces deux inserts présentent chacun une forme allongée et sont orientés sensiblement selon l'axe Y du véhicule.

Chaque insert est moins long que la largeur du vitrage à l'extrémité où il se trouve de sorte que ses deux extrémités 44, 45, longitudinales sont dans la portion de joint profilé 3.

La figure 2 montre l'insert 4 qui a été fabriqué à partir d'une plaque plane en métal ou alliage métallique qui a été pliée quatre fois, à chaque fois selon un pli longitudinal et à angle droit, afin de former sensiblement un pavé droit allongé, ouvert à ses deux extrémités 44 et 45. Cet insert comporte ainsi un creux 40, situé entre les parois de l'insert qui sont refermées sur elles-mêmes.

Comme visible plus particulièrement en figure 3, l'insert 4 présente ainsi en coupe transversale une forme de boucle rectangulaire, aux quatre coins arrondis. Un côté du rectangle n'est pas complet : une fente longitudinale 41 est situé tout le long de l'insert, entre les deux arêtes longitudinales qui ont été repliées l'une vers l'autre.

La largeur w de cette fente 41 est de l'ordre de 0,5 à 5 mm, par exemple de 2 mm.

Une soudure ou un moyen de jonction 6 supplémentaire ferme la fente 41 longitudinale issue de la jonction des bords longitudinaux après les pliages.

La description qui suit est faite en référence à l'insert situé en haut de figure 1 mais s'applique à tout type d'insert qui présente le long d'une partie principale P située à l'intérieure de la portion de joint profilé 3, en coupe transversale, une section refermée sur elle-même en forme de boucle et formant un creux 40.

En lien avec la figure 1, il faut comprendre que dans la variante illustrée, le profil de l'insert 4 est le même sur toute sa longueur ; la partie principale P est donc la totalité de l'insert 4.

Toutefois, il n'est pas exclu que l'insert selon l'invention présente une (ou plusieurs) autre(s) partie(s), non représentée(s), qui est (ou font) saillie partiellement ou totalement en dehors de la portion de joint profilé ; par exemple, l'insert peut comporter une (ou plusieurs) ailes qui est (sont) en partie ou en totalité en dehors de la portion de joint profilé, pour permettre le coulissement du vitrage, et/ou sa fixation à la carrosserie, ou pour permettre la fixation d'un accessoire au vitrage.

La matière de l'insert 4 peut être :
- un acier inoxydable, ou
- un acier traité contre la corrosion (mais pas forcément avec une cataphorèse, par exemple par un pré-zincage), ou
- une matière plastique éventuellement renforcée d'une charge, comme par exemple un polyamide chargé en fibres de verres (ex. : PA66FV).

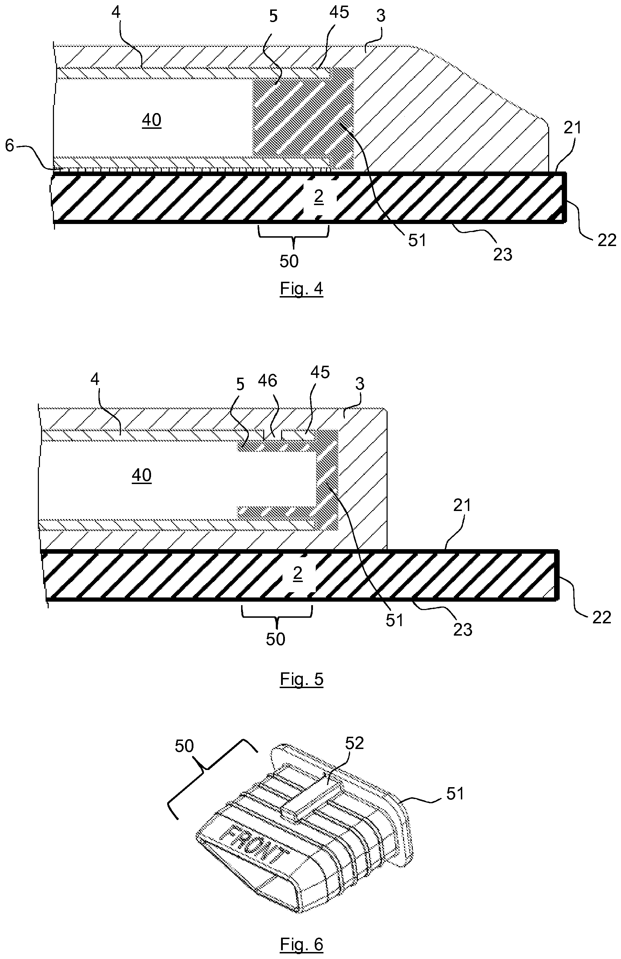

Lorsque le bouchon 5 est une pièce rapportée, comme pour les variantes des figures 4 à 7, ce bouchon présente un corps 50 présentant une section extérieure égale à la section intérieure Si de l'extrémité 45. Ce bouchon 5 rapporté doit fermer hermétiquement l'extrémité 45 afin que la matière du cordon profilé ne puisse pénétrer dans le creux 40 lors de l'injection de cette matière, alors même que cette injection se fait sous pression.

Dans la variante de la figure 4, le bouchon 5 est plein : le corps 50 rempli tout l'espace intérieur de l'extrémité 45.

Dans cette variante, le bouchon 5 présente en outre une tête 51 qui présentant une section extérieure supérieure à la section extérieure Sₑ de l'extrémité 45.

Ainsi, le bouchon présente une forme qui est plus proche de la forme d'un bouchon de champagne que de celle d'un bouchon de vin ; la fermeture de l'extrémité 45 est ainsi plus hermétique que s'il n'y avait pas de tête car lors de l'injection de la matière du cordon profilé sous pression, cette matière appui la tête 51 contre l'extrémité 45 et cette force augmente encore l'étanchéité.

La variante de la figure 4 se distingue par ailleurs des autre variantes en ce qu'il n'y a pas de matière du joint profilé dans le volume située exactement entre l'insert et la face intérieure de l'élément vitré.

Cette figure 4 illustre l'utilisation du moyen de jonction 6 sous forme d'une couche de colle ou d'un ruban adhésif double face qui est disposé entre la face inférieure de l'insert 4 et la face intérieure 21 de l'élément vitré 2.

Dans la variante de la figure 5, le corps 50 du bouchon 5 n'est pas plein afin que le bouchon soit plus léger. Le bouchon 5 est une pièce rapportée qui présente en coupe longitudinale une forme de U.

La figure 5 montre par ailleurs que l'extrémité 45 peut comporter au moins un trou 46 qui est bouché en face intérieure de l'insert par le bouchon 5. Ce trou 46 a servi au positionnement de l'insert dans le moule d'injection lors de l'injection de la matière de la portion de joint profilé. La portion de joint 3 ne comporte pas de marque à l'endroit où l'insert a été maintenu pendant l'injection car lors de l'ouverture du moule la matière de joint s'est égalisée à cet endroit du fait qu'elle n'était pas encore complètement polymérisée ou dure à ce moment là.

La figure 6 montre un exemple de réalisation du bouchon de la figure 5 et illustre que les faces du corps 50 qui doivent entrer en contact avec la face intérieure de l'extrémité 45 sont en forme de dents de scie, afin d'améliorer encore l'étanchéité.

Cette figure montre par ailleurs la présence d'un appendice 52 qui est enfoncé lors de l'introduction du bouchon dans l'extrémité 45 afin de fermer hermétiquement le trou 46.

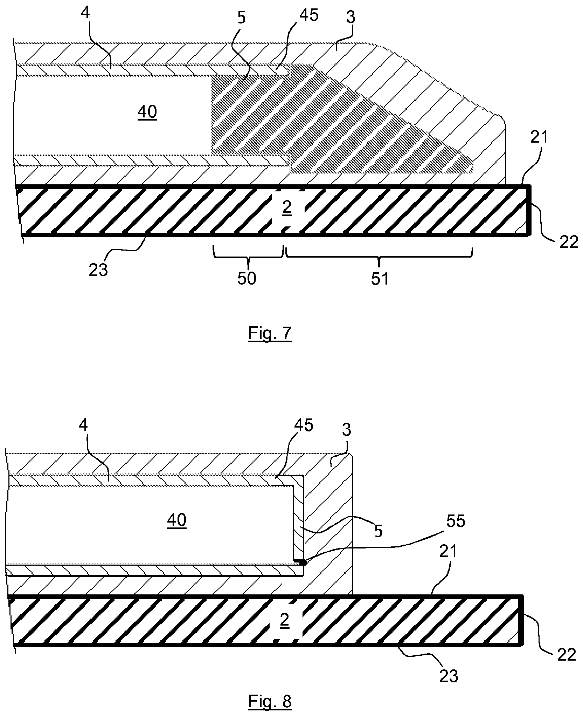

Dans la variante de la figure 7, la tête 51 du bouchon 5 n'est pas plate mais volumineuse : son volume suit sensiblement la surface du joint profilé adjacente afin de faciliter l'écoulement de la matière du joint dans le moule ; il est possible que cette tête 51 ne soit pas pleine afin que le bouchon soit plus léger.

Il existe aussi une variante à bouchon pièce rapportée qui n'est pas illustrée, dans laquelle le bouchon est, en partie au moins, en mousse. Ce peut être par exemple tout l'équivalent du corps 50 des variantes précédentes qui est en mousse, voire tout le bouchon. La mousse doit être choisie de telle sorte que le bouchon ferme hermétiquement l'extrémité afin que la matière du cordon profilé ne puisse pénétrer dans le creux lors de l'injection de cette matière.

La figure 8 illustre une variante spécifique pour laquelle le bouchon 5 n'est pas une pièce rapportée mais fait partie intégrante de l'insert.

En se basant sur la configuration de l'insert de la figure 3, une possibilité est de réaliser un insert plus long que nécessaire, puis de couper les bords gauche et droit à l'extrémité 45 afin de ne conserver que le bord supérieur pour former une aile qui est ensuite pliée à 90 ° pour obstruer le creux 40, puis soudée par une soudure 55 au pourtour intérieur de l'insert afin de fermer hermétiquement l'extrémité 45 pour que la matière du cordon profilé ne puisse pénétrer dans le creux 40 lors de l'injection de cette matière, alors même que cette injection se fait sous pression.

Le bouchon selon l'invention permet ainsi d'empêcher que la matière de la portion de joint profilé ne pénètre dans le creux de la partie principale de l'insert d'une manière aléatoire lors de l'injection de cette matière ; le bouchon selon l'invention forme ainsi une barrière étanche vis-à-vis matière de la portion de joint profilé ; il y a toujours de la matière de la portion de joint profilé contre le bouchon puisqu'il forme ainsi une partie de la paroi de la cavité de moulage qui permet de mouler la portion de joint profilé.

Dans toutes les variantes illustrées, l'extrémité 45 est complètement intégrée dans la portion de joint profilé 3 de telle sorte que tout le pourtour du bouchon qui n'est pas dans l'insert est intégré dans la portion de joint profilé 3. Toutefois, grâce au bouchon selon l'invention, il est envisageable qu'une partie seulement du pourtour du bouchon soit intégrée dans la portion de joint profilé 3, alors que cela n'était pas possible auparavant.

## Revendications

1. Vitrage (1) comportant un élément vitré (2), au moins une portion de joint profilé (3) et au moins un insert (4) situé au moins partiellement à l'intérieur de ladite portion de joint profilé (3), ledit insert (4) présentant le long d'une partie principale (P) qui est dans ladite portion de joint profilé (3), en coupe transversale, une section refermée sur elle-même en forme de boucle et formant un creux (40), **caractérisé en ce que** ladite partie principale (P) est formée par pliage d'une plaque longitudinale sur elle-même qui est refermée le long d'une jonction longitudinale par une soudure ou par un moyen de jonction (6) supplémentaire, ladite partie principale (P) comportant à au moins une extrémité (44, 45), et de préférence à deux extrémités (44, 45) opposées, un bouchon (5) qui ferme ladite extrémité et de préférence lesdites extrémités **et en ce que** ledit insert (4) est disposé par l'intermédiaire d'un revêtement adhésif sur une face dudit élément vitré (2) avec ainsi un côté de l'insert qui est indirectement en contact avec l'élément vitré (2) et ladite portion de joint profilé (3) qui est présente autour du reste du contour extérieur de l'insert (4).

2. Vitrage (1) selon la revendication 1, **caractérisé en ce que** ledit bouchon (5) est une pièce rapportée qui présente un corps (50) présentant une section extérieure égale voire supérieure à la section intérieure (Sᵢ) de ladite extrémité (44, 45).

3. Vitrage (1) selon la revendication 1 ou 2, **caractérisé en ce que** ledit bouchon (5) est une pièce rapportée qui présente en coupe longitudinale une forme de U.

4. Vitrage (1) selon l'une quelconque des revendications 1 à 3, **caractérisé en ce que** ledit bouchon (5) est une pièce rapportée qui comporte au moins une face en contact avec une face intérieure de ladite extrémité (44, 45) et qui est en forme de dents de scie.

5. Vitrage (1) selon l'une quelconque des revendications 1 à 4, **caractérisé en ce que** ledit bouchon (5) est une pièce rapportée qui présente une tête (51) présentant une section extérieure égale voire supérieure à la section extérieure (Sₑ) de ladite extrémité (44, 45).

6. Vitrage (1) selon l'une quelconque des revendications 1 à 5, **caractérisé en ce que** ledit bouchon (5) est une pièce rapportée qui est au moins en partie en mousse, avec la mousse dudit bouchon qui remplit la section de ladite extrémité.

7. Vitrage (1) selon l'une quelconque des revendications 1 à 6, **caractérisé en ce que** ladite extrémité (44, 45) comporte au moins un trou (46), ledit trou (46) étant bouché en face intérieure dudit insert par ledit bouchon (5).

8. Vitrage (1) selon la revendication 1, **caractérisé en ce que** ledit bouchon (5) est formé à ladite extrémité de ladite partie principale par pliage et soudure d'une aile dudit insert (4).

9. Vitrage (1) selon l'une quelconque des revendications 1 à 8, **caractérisé en ce que** ladite extrémité (44, 45) et de préférence lesdites extrémités (44, 45), de ladite partie principale (P) sont intégrée complètement, dans ladite portion de joint profilé (3).

10. Vitrage (1) selon l'une quelconque des revendications 1 à 9, **caractérisé en ce que** ledit moyen de jonction (6) est une couche de colle ou un ruban adhésif disposé entre ledit insert (4) et une face dudit élément vitré (2).

11. Procédé de fabrication d'un vitrage (1) selon l'une quelconque des revendications 1 à 10, ledit vitrage (1) comportant un élément vitré (2), au moins une portion de joint profilé (3) et au moins un insert (4) situé au moins partiellement à l'intérieur de ladite portion de joint profilé (3), ledit insert (4) présentant le long d'une partie principale (P) qui est dans ladite portion de joint profilé (3), en coupe transversale, une section refermée sur elle-même en forme de boucle et formant un creux (40), ledit procédé comportant une étape de positionnement dudit élément vitré (2) et dudit insert (4) dans une partie de moule afin de former ladite portion de joint profilé (3) dans une cavité dudit moule, **caractérisé en ce que**, avant que ledit insert (4) soit positionné dans ladite partie de moule, ladite partie principale (P) est fermée à au moins une extrémité (44, 45), et de préférence à deux extrémités opposées (44,45), par un bouchon (5).

## Patentansprüche

1. Verglasung (1), umfassend ein verglastes Element (2), mindestens einen Dichtungsprofilabschnitt (3) und mindestens einen Einsatz (4), der sich mindestens teilweise in dem Inneren des Dichtungsprofilabschnitts (3) befindet, wobei der Einsatz (4) entlang eines Hauptteils (P), der in dem Inneren des Dichtungsprofilabschnitts (3) liegt, im Querschnitt einen Schnitt aufweist, der in einer Schleifenform auf sich selbst geschlossen ist und eine Vertiefung (40) bildet, **dadurch gekennzeichnet, dass** der Hauptteil (P) durch Falten einer Längsplatte auf sich selbst gebildet ist, die entlang einer Längsverbindung durch eine Schweißnaht oder durch ein zusätzliches Verbindungsmittel (6) geschlossen ist, wobei der Hauptteil (P) an mindestens einem Ende (44, 45) und vorzugsweise an zwei entgegengesetzten Enden (44, 45), einen Stopfen (5) umfasst, der das Ende, und vorzugsweise die Enden schließt **und dass** der Einsatz (4) mittels einer Klebebeschichtung auf einer Fläche des verglasten Elements (2) angeordnet ist, mit daher einer Seite des Einsatzes, die indirekt mit dem verglasten Element (2) und dem Dichtungsprofilabschnitt (3), der um den Rest der Außenkontur des Einsatzes (4) anwesend ist, in Kontakt steht.

2. Verglasung (1) nach Anspruch 1, **dadurch gekennzeichnet, dass** der Stopfen (5) ein angebautes Teil ist, das einen Körper (50) aufweist, der einen Außenschnitt aufweist, der gleich oder größer ist als der Innenschnitt (Sᵢ) des Endes (44, 45).

3. Verglasung (1) nach Anspruch 1 oder 2, **dadurch gekennzeichnet, dass** der Stopfen (5) ein angebautes Teil ist, das einen U-förmigen Längsschnitt aufweist.

4. Verglasung (1) nach einem der Ansprüche 1 bis 3, **dadurch gekennzeichnet, dass** der Stopfen (5) ein angebautes Teil ist, das mindestens eine Fläche aufweist, die mit einer Innenfläche des Endes (44, 45) in Kontakt steht, und die sägezahnförmig ist.

5. Verglasung (1) nach einem der Ansprüche 1 bis 4, **dadurch gekennzeichnet, dass** der Stopfen (5) ein angebautes Teil ist, das einen Kopf (51) aufweist, der einen Außenschnitt aufweist, der gleich oder größer ist als der Außenschnitt (Sₑ) des Endes (44, 45).

6. Verglasung (1) nach einem der Ansprüche 1 bis 5, **dadurch gekennzeichnet, dass** der Stopfen (5) ein angebautes Teil ist, das zumindest teilweise aus Schaumstoff besteht, mit dem Schaumstoff des Stopfens, der den Schnitt des Endes ausfüllt.

7. Verglasung (1) nach einem der Ansprüche 1 bis 6, **dadurch gekennzeichnet, dass** das Ende (44, 45) mindestens ein Loch (46) umfasst, wobei das Loch (46) an der Innenfläche des Einsatzes durch den Stopfen (5) verschlossen ist.

8. Verglasung (1) nach Anspruch 1, **dadurch gekennzeichnet, dass** der Stopfen (5) an dem Ende des Hauptteils durch Falten und Schweißen eines Flügels des Einsatzes (4) gebildet ist.

9. Verglasung (1) nach einem der Ansprüche 1 bis 8, **dadurch gekennzeichnet, dass** das Ende (44, 45) und vorzugsweise die Enden (44, 45) des Hauptteils (P) vollständig in den Dichtungsprofilabschnitt (3) integriert sind.

10. Verglasung (1) nach einem der Ansprüche 1 bis 9, **dadurch gekennzeichnet, dass** das Verbindungsmittel (6) eine Klebstoffschicht oder ein Klebeband ist, die/das zwischen dem Einsatz (4) und einer Fläche des verglasten Elements (2) angeordnet ist.

11. Verfahren zur Herstellung einer Verglasung (1) nach einem der Ansprüche 1 bis 10, wobei die Verglasung (1) ein verglastes Element (2), mindestens einen Dichtungsprofilabschnitt (3) und mindestens einen Einsatz (4) umfasst, der mindestens teilweise in dem Inneren des Dichtungsprofilabschnitts (3) liegt, wobei der Einsatz (4) entlang eines Hauptteils (P), der in dem Dichtungsprofilabschnitt (3) liegt, im Querschnitt einen Schnitt aufweist, der in einer Schleifenform auf sich selbst geschlossen ist und eine Vertiefung (40) bildet, wobei das Verfahren einen Schritt des Positionierens des verglasten Elements (2) und des Einsatzes (4) in einem Formteil umfasst, um den Dichtungsprofilabschnitt (3) in einem Hohlraum der Form zu bilden, **dadurch gekennzeichnet, dass** der Hauptteil (P) an mindestens einem Ende (44, 45), und vorzugsweise an zwei entgegengesetzten Enden (44, 45) durch einen Stopfen (5) geschlossen wird, bevor der Einsatz (4) in dem Formteil positioniert wird.

## Claims

1. A glazing (1) comprising a glazed element (2), at least one profiled seal portion (3) and at least one insert (4) which is located at least partially inside said profiled seal portion (3), said insert (4) having along a main portion (P) which is in said profiled seal portion (3), in cross-section, a section which is closed on itself in the form of a loop and which forms a hollow member (40), **characterized in that** said main portion (P) is formed by folding over on itself a longitudinal plate which is closed along a longitudinal seal by a weld seam or by an additional connection means (6), said main portion (P) comprising at least at one end (44, 45), and preferably at two opposing ends (44, 45), a stopper (5) which closes said end and preferably said ends **and in that** said insert (4) is arranged via an adhesive coating on a face of the glazed element (2), thus with one side of the insert which is indirectly in contact with the glazed element (2) and said profiled seal portion (3) which is present around the remainder of the outer contour of the insert (4).

2. The glazing (1) as claimed in claim 1, **characterized in that** said stopper (5) is a fitted component which has a body (50) which has an outer section which is equal to or greater than the inner section (Sᵢ) of the end (44, 45).

3. The glazing (1) as claimed in claim 1 or 2, **characterized in that** said stopper (5) is a fitted component which is U-shaped in longitudinal section.

4. The glazing (1) as claimed in one of claims 1 to 3, **characterized in that** said stopper (5) is a fitted component which comprises at least one face which is in contact with an inner face of said end (44, 45) and which is in the form of saw teeth.

5. The glazing (1) as claimed in one of claims 1 to 4, **characterized in that** said stopper (5) is a fitted component which has a head (51) which has an outer section which is equal to or greater than the outer section (Sₑ) of the end (44, 45).

6. The glazing (1) as claimed in one of claims 1 to 5, **characterized in that** said stopper (5) is a fitted component which is at least partially of foam material, with the foam material of said stopper which fills the section of said end.

7. The glazing (1) as claimed in one of claims 1 to 6, **characterized in that** said end (44, 45) comprises at least one hole (46), the hole (46) being closed at the inner face of said insert by said stopper (5).

8. The glazing (1) as claimed in claim 1, **characterized in that** said stopper (5) is formed at said end of said main portion by folding and welding a wing of said insert (4).

9. The glazing (1) as claimed in one of claims 1 to 8, **characterized in that** said end (44, 45), and preferably said ends (44, 45), of said main portion (P) are integrated completely in the profiled seal portion (3).

10. The glazing (1) as claimed in one of claims 1 to 9, **characterized in that** said connection means (6) is a layer of adhesive or an adhesive tape which is arranged between said insert (4) and a face of the glazed element (2).

11. A method for producing a glazing (1) as claimed in one of claims 1 to 10, the glazing (1) comprising a glazed element (2), at least one profiled seal portion (3) and at least one insert (4) which is located at least partially inside said profiled seal portion (3), said insert (4) having along a main portion (P) which is in the profiled seal portion (3), in cross-section, a section which is closed on itself in the form of a loop and which forms a hollow member (40), the method comprising a step of positioning said glazed element (2) and said insert (4) in a mold portion in order to form said profiled seal portion (3) in a cavity of said mold, **characterized in that,** before said insert (4) is positioned in the mold portion, said main portion (P) is closed at least at one end (44, 45), and preferably at two opposing ends (44,45), by a stopper (5).
